# EUROPÄISCHE PATENTSCHRIFT

(11) **EP 3 441 797 B1**
(45) Veröffentlichungstag und Bekanntmachung des Hinweises auf die Patenterteilung: **15.04.2020**
(21) Anmeldenummer: 18186409.1
(22) Anmeldetag: 30.07.2018
(51) Int. Cl.: G01V 8/20

(54) **SENSORSYSTEM**
SENSOR SYSTEM
SYSTÈME DE CAPTEUR

(30) Priorität: 11.08.2017 EP 17185957
(43) Veröffentlichungstag der Anmeldung: 13.02.2019
(73) Patentinhaber: SICK AG, 79183 Waldkirch (DE)
(72) Erfinder: Eble, Johannes, 79183 Waldkirch (DE); Kienzler, Stefan, 79194 Gundelfingen (DE); Krieg, Matthias, 78120 Furtwangen (DE); Jäger, Dr. Thomas, 79110 Freiburg (DE); Reichenbach, Hans-Peter, 79286 Glottertal (DE); Bürger, Jürgen, 79331 Nimburg (DE); Schwiderski, Frank, 79346 Endingen (DE); Allgeier, Simon, 79104 Freiburg (DE)

(56) Entgegenhaltungen:
- EP-B1- 2 208 092
- DE-A1-102005 046 478
- DE-U1-202007 011 016
- US-A1- 2010 176 300

## Beschreibung

Die vorliegende Erfindung betrifft ein Sensorsystem gemäß dem Oberbegriff von Anspruch 1.

Derartige Sensorsysteme sind jeweils aus der DE 20 2014 102 335 U1 oder der EP 2 208 092 B1 bekannt. Nachteilig bei den genannten Sensorsystemen ist, dass die Sensoren über Leitungen miteinander verbunden sind und Aufwand bei der Inbetriebnahme verursachen.

Die DE 20 2007 011 016 U1 offenbart einen optischen Sensor zur Erfassung von Objekten in einem Überwachungsbereich, mit wenigstens einem Sendelichtstrahlen emittierenden Sender und wenigstens einem Empfangslichtstrahlen empfangenden Empfänger, wobei der Sender und/oder Empfänger jeweils in einem einstückig ausgebildeten Blendentubus gelagert ist, wobei erste Teile des Blendentubus eine Lichtfalle bilden und weitere Teile zur Lagerung einer Optik und/oder zur Ausbildung einer Blende vorgesehen sind.

Eine Aufgabe der Erfindung besteht darin, ein verbessertes Sensorsystem bereitzustellen, das sehr einfach in Betrieb genommen werden kann und das ohne Kabel auskommt.

Die Aufgabe wird gemäß Anspruch 1 gelöst durch ein Sensorsystem mit mehreren Sensoren mit jeweils einem Sensorgehäuse, wobei die Sensorgehäuse an einer Aufnahmeschiene befestigbar sind, wobei die Aufnahmeschiene ein flächiges Kontaktelement mit mindestens zwei Leiterbahnen aufweist und die Sensorgehäuse jeweils mindestens zwei Kontaktstifte aufweisen, wobei die Kontaktstifte bei in die Aufnahmeschiene eingesetztem Sensor jeweils mit den Leiterbahnen des flächigen Kontaktelements verbunden sind, wobei das flächige Kontaktelement mindestens eine dritte und eine vierte Leiterbahn aufweist, wobei die dritte Leiterbahn für eine Masseverbindung und die vierte Leiterbahn für eine Versorgungsspannung vorgesehen ist, wobei auf dem flächigen Kontaktelement jeweils für jedes Sensorgehäuse mindestens ein Schaltelement für die Leiterbahn der Versorgungsspannung vorgesehen ist, wobei das jeweilige Schaltelement durch ein Betätigungsmittel des Sensorgehäuses betätigbar ist.

Die Erfindung ermöglicht eine kabellose Anordnung von Sensorgehäuse mit Sensoren, deren Einbindung über das flächige Kontaktelement und die Aufnahmeschiene erfolgt. Hierbei besitzen die Sensorgehäuse keine Kabelverbindung und keine Stecker-/Buchsenverbindung, sondern elektrische Kontaktstifte, die direkt mit den Leiterbahnen des flächigen Kontaktelements verbunden werden.

Die Aufnahmeschiene verfügt einerseits über eine mechanische Aufnahme für die Sensorgehäuse und andererseits über das flächige Kontaktelement, mit der die elektrische Verbindung zu den Sensorgehäusen hergestellt wird.

Die Leiterbahnen des flächigen Kontaktelements sind beispielsweise nur im Bereich der Sensorgehäuserückseite kontaktierbar. Die übrige Fläche ist beispielsweise isoliert ausgeführt. Das flächige Kontaktelement enthält die Leiterbahnen, die auf jeder Seite mit einer Isolierschicht bedeckt sind. Lediglich an den Stellen, an denen die Leiterbahnen kontaktiert werden sollen, sind die Leiterbahnen ohne Isolierung ausgebildet.

Die Aufnahmeschiene kann beispielsweise aus Kunststoff oder Metall hergestellt sein. Kunststoff hat hier den Vorteil, dass die Aufnahmeschiene selbst isolierend ausgebildet ist. Jedoch können metallische Aufnahmeschienen, beispielsweise aus Aluminium stabiler ausgeführt werden, als Kunststoffschienen. Beispielsweise wird die Aufnahmeschiene im Extrudierverfahren hergestellt. Die Aufnahmeschiene kann optional auch starr ausgeführt sein.

Die Kontaktstifte stehen beispielsweise aus dem Sensorgehäuse hervor, so dass diese das flächige Kontaktelement kontaktieren können, sobald das Sensorgehäuse auf dem flächigen Kontaktelement aufgesetzt wird und auf der Aufnahmeschiene befestigt wird.

Das flächige Kontaktelement ist für eine Vielzahl von Positionsplätzen bzw. Steckplätzen für die Sensorgehäuse ausgebildet. Die Sensorgehäuse können dabei frei wählbar an einer bestimmten Position angeordnet werden. Dadurch kann quasi eine frei wählbare Kette von Sensoren gebildet werden.

Die Leiterbahnen sind dabei parallel nebeneinander auf dem flächigen Kontaktelement angeordnet. Über die Leiterbahnen wird beispielsweise die Energieversorgung und die Signalverbindung mit den Sensorgehäusen und zwischen den Sensorgehäusen durchgeführt.

In Weiterbildung der Erfindung ist das flächige Kontaktelement eine starre Leiterplatte oder eine Kontaktfolie.

Beispielsweise ist die Kontaktfolie durch eine flexible, also biegsame Leiterfolie gebildet. Die Kontaktfolie hat den Vorteil, dass diese auf Rollen bevorratet werden kann und einfach in der Aufnahmeschiene angeordnet werden kann. Ein weiterer Vorteil der Kontaktfolie ist, dass diese sehr dünn ausgeführt werden kann.

Bei der starren Leiterplatte handelt es sich beispielsweise um eine Platine. Diese weist beispielsweise eine oder mehrere Lagen auf. Starre Leiterplatten können sehr robust ausgeführt werden, so dass diese für eine Vielzahl von Kontaktierungsvorgängen geeignet sind.

In Weiterbildung der Erfindung weisen die Aufnahmeschiene und das Sensorgehäuse jeweils mechanische Rastmittel auf, wodurch die Sensorgehäuse in der Aufnahmeschiene eingerastet werden können, wodurch die Sensorgehäuse in der Aufnahmeschiene mechanisch fixiert sind.

Dadurch können die Sensorgehäuse ohne zusätzliche verlierbare Befestigungsmittel, wie beispielsweise Schrauben an der Aufnahmeschiene befestigt werden. Die mechanischen Rastmittel geben dabei bereits mindestens eine vordefinierte Lage des Sensorgehäuses vor. Es können auch mehrere vordefinierte Lagen vorgesehen werden, wobei jedoch immer eine richtige Kontaktierung mit dem flächigen Kontaktelement gewährleistet wird.

Die Sensorgehäuse können dabei auch wieder bei Bedarf entfernt werden. Hierzu werden die mechanischen Rastmittel gelöst und das Sensorgehäuse kann wieder entfernt werden.

Die Rastmittel bzw. ein Einrastmechanismus besteht beispielsweise aus Rast- und Federelementen am Sensorgehäuse und an der Aufnahmeschiene, so dass das Sensorgehäuse in die Aufnahmeschiene eingerastet bzw. eingeschnappt werden kann. Damit ist eine Fixierung des Sensorgehäuses an der Aufnahmeschiene gewährleistet. Die Fixierung könnte auch magnetisch erfolgen.

Die Sensorgehäuse können an verschiedenen vordefinierten Positionen einrasten und mit den Leiterbahnen der Aufnahmeschiene kontaktiert werden.

Beispielsweise kann das Sensorgehäuse in einem modifizierten Kanban System eingesetzt werden. Das Sensorgehäuse wird in der Aufnahmeschiene eingeklickt und kontaktiert. Hierbei kann ein Stromfluss von rechts oder links möglich sein.

Weiter kann das Sensorgehäuse auch an fahrerlosen Transportfahrzeugen eingesetzt werden. Hierbei können die Sensoren in einer gebogenen Stoßstange eingeklickt werden.

Weiter kann mit den Sensorgehäusen ein Lichtgitter entlang der Aufnahmeschiene realisiert werden. Dabei werden die Sensorgehäuse in einem bestimmten Raster mit bestimmten Abständen entlang der Aufnahmeschiene angeordnet. Es werden nur die Positionen auf der Aufnahmeschiene bestückt, welche auch benötigt werden.

Weiter kann das Sensorgehäuse in einem Regalsystem mit einer Pick-to-Light Funktion eingesetzt werden, wobei eine Anzeige ein gültiges Regalfach anzeigt.

In einer bevorzugten Ausführungsform der Erfindung sind die zwei Leiterbahnen für zwei Busleitungen vorgesehen.

Bei dem Bus bzw. Bussystem mit zwei Busleitungen kann es sich um ein verfügbares Bussystem nach dem Stand der Technik handeln. Jedoch kann es auch vorgesehen sein, dass ein firmeninternes Bussystem verwendet wird.

Verfügbare Bussysteme nach dem Stand der Technik sind beispielsweise CAN-Bus, Profibus, Interbus, ASI-Bus, Devicenet oder ähnliche Bussysteme.

In Weiterbildung der Erfindung weist das flächige Kontaktelement mindestens eine dritte und eine vierte Leiterbahn auf, wobei die dritte Leiterbahn für eine Masseverbindung und die vierte Leiterbahn für eine Versorgungsspannung vorgesehen ist.

Dadurch wird die Spannungsversorgung bzw. Stromversorgung der Sensorgehäuse getrennt über das flächige Kontaktelement geführt. Dadurch sind alle notwendigen Anschlüsse des Sensorgehäuses über das flächige Kontaktelement geführt. Die Leiterbahnen für die Energieversorgung sind dabei für die maximale Stromaufnahme eines Gesamtsystems ausgelegt. Ggf. sind mehrere Leiterbahnen parallel angeordnet, um die Energieversorgung bereitzustellen.

Gemäß der Erfindung ist auf dem flächigen Kontaktelement jeweils für jedes Sensorgehäuse mindestens ein Schaltelement für die Leiterbahn der Versorgungsspannung vorgesehen, wobei das jeweilige Schaltelement durch ein Betätigungsmittel des Sensorgehäuses betätigt wird.

Dadurch ist es möglich, die Versorgungsspannung lokal durch den Sensor bzw. das Sensorgehäuse reversibel für andere nachfolgend angeordnete Sensorgehäuse zu unterbrechen. Diese Leitung wird dann anschließend im Sensorgehäuse geschlossen. Das Sensorgehäuse besitzt hierzu fünf elektrische Kontaktstifte zum flächigen Kontaktelement. Das flächige Kontaktelement weist hierzu an jeder möglichen Verbindungsstelle zu Sensorgehäusen fünf Kontaktflächen auf. Die fünf Kontaktstifte sind zwei Kontaktstifte für die Busleitungen, ein Kontaktstift für die Masseverbindung und zwei Kontaktstifte für die Versorgungsleitungen.

Durch die Unterbrechung und anschließenden Verbindung der Versorgungspannung können beispielsweise die Sensoren nacheinander initialisiert werden. Weiter können die Sensoren dadurch beispielsweise untereinander erkannt oder gegenüber einer übergeordneten Steuerung identifiziert werden.

Beispielsweise weiß eine übergeordnete Steuerung dadurch, in welcher Reihenfolge die Sensorgehäuse angeordnet sind. Die einzelnen Steuer- und Auswerteeinheiten der Sensorgehäuse können vor jeder Inbetriebnahme lokal die Energieversorgung unterbrechen. Eine übergeordnete Steuer- und Auswerteeinheit kommuniziert beispielsweise mit dem ersten Sensor bzw. dem ersten Sensorgehäuse. Nachdem eine Adresszuordnung für den ersten Sensor bzw. das erste Sensorgehäuse erfolgt ist, überbrückt der erste Sensor die Energieversorgung, so dass eine Kommunikation mit dem zweiten Sensor erfolgt und auf die gleiche Weise eine Zuordnung bzw. eine Adresszuordnung für den zweiten Sensor erfolgt. Entsprechend werden die übrigen Sensoren initialisiert.

Eine Adresszuordnung wird dabei somit fortlaufend automatisch vorgenommen. Dazu wird die Versorgungsspannung durch den Sensor bzw. das Sensorgehäuse nach und nach weitergeschaltet. Somit ist bei der Kontaktierung des Sensors die Versorgungsspannung aufzutrennen und nach der Adressierung wieder zu schließen.

Die Kontaktstifte des Sensorgehäuses sind beispielsweise als Federkontaktstifte ausgebildet. Anstelle der Kontaktstifte kann beispielsweise auch mit Kontaktfedern kontaktiert werden.

Für die Unterbrechung der Leiterbahn ist an dem Sensorgehäuse das Betätigungsmittel bzw. das Betätigungselement vorgesehen. Durch das Einrasten des Sensorgehäuses in die Aufnahmeschiene übt das Betätigungselement eine Kraft auf das Schaltelement aus, welches als Schalter arbeitet.

Das Betätigungselement kann beispielsweise aus mehreren aneinandergereihten Elementen bestehen, welche beispielsweise federnd gelagert sind. Die jeweilige Federkraft ist größer als die Betätigungskraft des Schalters. Damit kann das Sensorgehäuse rasterlos auf die Aufnahmeschiene aufgebracht werden.

Dadurch wird beispielsweise das Schaltelement, welches beispielsweise als Schließerkontakt ausgebildet ist, geschlossen und die Versorgungsspannung unterbrochen. Danach wird die Versorgungsspannung wieder über eine interne Kontaktierung im Sensorgehäuse geschlossen.

Bei dem Schaltelement 12 kann es sich um einen elektromechanischen Schalter handeln.

Wird der Sensor von der Aufnahmeschiene getrennt, öffnet sich der Schalter wieder und die Stromleitung ist wieder geschlossen.

Ist der mögliche Steckplatz nicht bestückt, so ist die Versorgungsspannungsleitung nicht unterbrochen. D.h. die Spannungsversorgung bis zum nächsten Sensorgehäuse ist gewährleistet.

Nach dem Stecken des Sensorgehäuses wird die Spannungsversorgung unterbrochen und nach einer Adressierung wird die Spannungsversorgung weitergeschaltet.

Pro Steckplatz wird mindestens ein Schaltelement vorgesehen, auch wenn der Steckplatz nicht durch ein Sensorgehäuse bestückt ist.

Die Sensorgehäuse können umgesteckt werden oder auch neue Sensorgehäuse hinzugefügt werden.

Die Spannungseinspeisung auf der Versorgungsspannungsleitung kann an einer beliebigen Stelle erfolgen, so dass der Stromfluss in beiden Richtungen der Versorgungsspannungsleitung möglich ist.

In Weiterbildung der Erfindung ist das Schaltelement ein Öffnerkontakt oder ein Schließerkontakt.
Der Öffnerkontakt bzw. Schließerkontakt kann beispielsweise als Schnappkontakt ausgeführt sein.

Ein Öffnerkontakt hat den Vorteil, dass damit beim Betätigen die Spannungs- bzw. Energieversorgung direkt unterbrochen werden kann.

Ein Schließerkontakt kann beispielsweise in Verbindung mit einem Transistor vorgesehen sein, um die Spannungsversorgung zu unterbrechen. Ein Schließerkontakt hat dabei den Vorteil, dass der Schalter an sich einfacher ausgeführt werden kann, da Schließerkontakte einfacher zu realisieren sind.

Beispielsweise ist ein Schnappkontakt als Schließer ausgebildet und eine zusätzliche Elektronikschaltung ist vorgesehen, um die Spannungsversorgung zu unterbrechen.

Der Öffnerkontakt bzw. Schließerkontakt ist beispielsweise durch einen Metall-Dom gebildet, welcher als Schalter funktioniert.

Beispielsweise können die Schaltelemente auch durch Metallkugeln gebildet werden, welche über elastische Elemente zusammengehalten werden, durch einen Kontaktstift kontaktierbar sind und durch das Betätigungsmittel lokal trennbar sind.

In Weiterbildung der Erfindung ist das Schaltelement mindestens ein Feldeffekttransistor oder eine Feldeffekttransistorstufe.

Dabei kann der Öffnerkontakt oder der Schließerkontakt durch den mindestens einen Feldeffekttransistor oder die Feldeffekttransistorstufe realisiert sein.

In dieser Ausführung kann der elektromechanische Schalter Teil einer Schaltung sein, beispielsweise auf Basis einer Transistorschaltung, insbesondere mit mindestens einem Feldeffekttransistor oder MOSFET-Transistor.

Beispielsweise ist eine Schaltung mit zwei Feldeffekttransistoren vorgesehen. Die Schaltung erlaubt einen Stromfluss in beiden Richtungen. Dabei sind weitere Bauteile, wie Dioden, mindestens ein Widerstand und mindestens ein Transistor im Sensorgehäuse untergebracht. Für das Weiterschalten des Strompfades wird eine Feldeffektortransistorstufe bestehend aus zwei Feldeffekttransistoren auf dem flächigen Kontaktelement bzw. auf der Leiterplatte oder einer Kontaktfolie genutzt. Statt mit einem Schalter schließt der Sensor mit einem niederohmigen Widerstand die Feldeffektortransistorstufe. Nach erfolgter Adressierung wird der Strompfad wieder frei geschaltet.

Neben Lösungen mit mechanischen Schaltern ist die Lösung mit Feldeffekttransistoren eine Lösung, die keinen mechanischen Schalter benötigt und sehr kostengünstig ist.

Ein zusätzlicher Vorteil ist, dass für das Weiterschalten der Spannung der vorhandene Feldeffekttransistor auf dem flächigen Kontaktelement genutzt wird und das Durchschalten im Sensor entfällt. Somit wird im Sensor kein Leistungsschaltelement für einen großen Stromfluss mehr benötigt. Ein weiterer Vorteil ist, dass der Stromfluss von beiden Richtungen erfolgen kann.

Gemäß einer bevorzugten Ausführungsform der Erfindung sind die Sensoren Einweglichtschranken, Reflexionslichtschranken, Lichttaster und/oder Distanzsensoren. Distanzsensoren basieren dabei beispielsweise auf dem Time-of-flight Verfahren, bei dem die Lichtlaufzeit ausgewertet wird. Weiter können Distanzsensoren auch nach dem Prinzip der Triangulation arbeiten.

Im Falle von Lichtschranken als Sensoren kann dabei beispielsweise ein frei definierbares Lichtgitter bzw. ein Lichtvorhang mit beliebigen Strahlabständen gebildet werden, da die Sensorgehäuse in beliebigen Abständen auf der Aufnahmeschiene angeordnet werden können.

Auch ist es möglich, unterschiedliche Sensoren an der Aufnahmeschiene anzuordnen. Beispielsweise können Einweglichtschranken, Reflexionslichtschranken, Lichttaster und/oder Distanzsensoren in beliebiger Reihenfolge und Abfolge angeordnet werden, um gezielt bestimmte Anwendungsfälle zu realisieren. Dadurch ist eine speziell anpassbare Anordnung von Sensoren möglich. Die Schiene kann auch nichtlinear ausgeführt werden. Das heißt z.B. gebogen mit einem gewissen Radius.

In Weiterbildung der Erfindung ist eine zentrale Steuer- und Auswerteeinheit vorgesehen, welche mit den Sensorgehäusen über das flächige Kontaktelement verbunden ist.

Die Steuer- und Auswerteeinheit wird dann auch wie die Sensorgehäuse über Kontaktstifte mit dem flächigen Kontaktelement verbunden, wobei die Steuer- und Auswerteeinheit ebenfalls über die Aufnahmeschiene befestigt wird.

In Weiterbildung der Erfindung ist das Sensorgehäuse zweiteilig aufgebaut, wobei ein erstes Teilgehäuse die Sensorelemente aufnimmt und ein zweites Teilgehäuse die Kontaktstifte aufweist, wobei das erste Teilgehäuse und das zweite Teilgehäuse über Steckkontakte miteinander verbunden sind.

In Weiterbildung der Erfindung können mehrere Aufnahmeschienen mechanisch bzw. mehrere flächige Kontaktelemente elektrisch miteinander verbunden werden. Hierzu ist beispielsweise zwischen flächigen Kontaktelementen ein Kabel mit Steckern verbunden.

In Weiterbildung weist das flächige Kontaktelement Löcher oder Aussparungen auf, um eine Ausrichtung des Sensorgehäuses relativ zu den Kontaktstellen bzw. dem Schalter zu gewährleisten.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Figur 1: ein Sensorsystem;
- Figur 2 und 3: jeweils eine Seitenansicht eines Sensorsystems;
- Figur 4 und 5: jeweils ein Schaltelement als Schließerkontakt auf der Kontaktfolie;
- Figur 6: ein Sensorsystem mit Einweglichtschranken;
- Figur 7 und 8: eine schematische Schaltung mit zwei Feldeffekttransistoren.

In den nachfolgenden Figuren sind identische Teile mit identischen Bezugszeichen versehen.

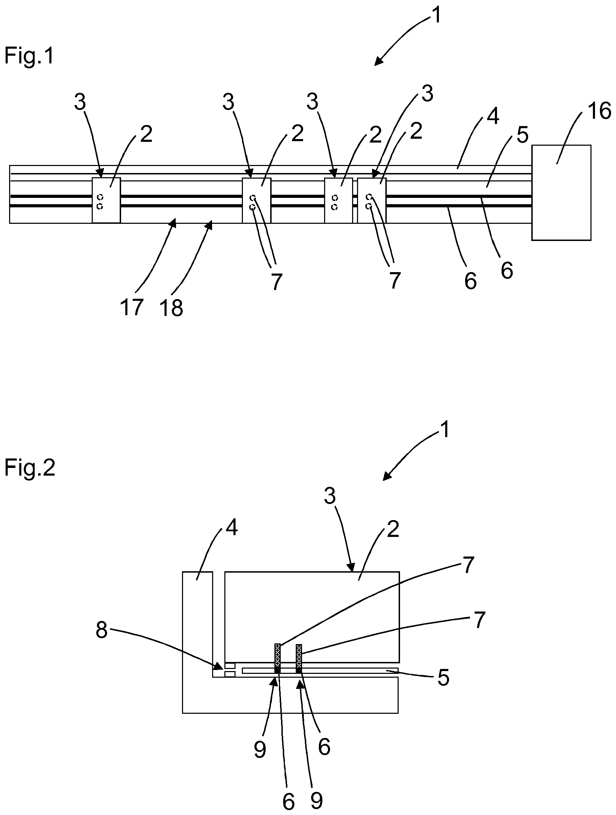

Figur 1 zeigt ein Sensorsystem 1 mit mehreren Sensoren 2 mit jeweils einem Sensorgehäuse 3, dadurch gekennzeichnet, dass die Sensorgehäuse 3 an einer Aufnahmeschiene 4 befestigbar sind, wobei die Aufnahmeschiene 4 ein flächiges Kontaktelement 5 mit mindestens zwei Leiterbahnen 6 aufweist und die Sensorgehäuse 3 jeweils mindestens zwei Kontaktstifte 7 aufweisen, wobei die Kontaktstifte 7 bei in die Aufnahmeschiene 4 eingesetztem Sensor 2 jeweils mit den Leiterbahnen 6 des flächigen Kontaktelements 5 verbunden sind. Die Aufnahmeschiene ist optional starr ausgeführt.

Gemäß den Figuren ist das flächige Kontaktelement 5 eine starre Leiterplatte 17 oder eine Kontaktfolie 18, insbesondere eine flexible Kontaktfolie.

Auch ist es möglich, gemäß Figur 1 unterschiedliche Sensoren 2 an der Aufnahmeschiene 4 anzuordnen. Beispielsweise können Einweglichtschranken, Reflexionslichtschranken, Lichttaster und/oder Distanzsensoren in beliebiger Reihenfolge und Abfolge angeordnet werden.

Gemäß Figur 1 ist eine zentrale Steuer- und Auswerteeinheit 16 vorgesehen, welche mit den Sensorgehäusen 3 über das flächige Kontaktelement 5 verbunden ist.

Die Steuer- und Auswerteeinheit 16 wird beispielsweise auch wie die Sensorgehäuse 3 über Kontaktstifte 7 mit dem flächigen Kontaktelement 5 verbunden, wobei die Steuer- und Auswerteeinheit 16 ebenfalls über die Aufnahmeschiene 4 befestigt wird.

Figur 2 zeigt eine Seitenansicht auf das Sensorsystem gemäß Figur 1.

Die Aufnahmeschiene 4 verfügt gemäß Figur 2 einerseits über eine mechanische Aufnahme für die Sensorgehäuse 3 und andererseits über das flächige Kontaktelement 5, mit der die elektrische Verbindung zu den Sensorgehäusen 3 hergestellt wird.

Die Leiterbahnen 6 des flächigen Kontaktelements 5 sind beispielsweise nur im Bereich der Sensorgehäuserückseite kontaktierbar. Die übrige Fläche ist beispielsweise isoliert ausgeführt. Beispielsweise ist das flächige Kontaktelement 5 durch eine flexible, also biegsame Leiterfolie gebildet. Das flächige Kontaktelement 5 enthält die Leiterbahnen 6, die auf jeder Seite mit einer Isolierschicht bedeckt sind. Lediglich an den Stellen, an denen die Leiterbahnen 6 kontaktiert werden sollen, sind die Leiterbahnen 6 ohne Isolierung ausgebildet. An der starren Aufnahmeschiene 4 ist flächige Kontaktelement 5 angeordnet.

Die Kontaktstifte 7 stehen beispielsweise aus dem Sensorgehäuse 3 hervor, so dass diese das flächige Kontaktelement 5 kontaktieren können, sobald das Sensorgehäuse 3 auf das flächige Kontaktelement 5 aufgesetzt wird und auf der Aufnahmeschiene 4 befestigt wird.

Das flächige Kontaktelement 5 ist für eine Vielzahl von Positionsplätzen bzw. Steckplätzen für die Sensorgehäuse 3 ausgebildet. Die Sensorgehäuse 3 können dabei frei wählbar an einer bestimmten Position angeordnet werden. Die Leiterbahnen 6 sind dabei parallel nebeneinander auf dem flächigen Kontaktelement 5 angeordnet.

Gemäß Figur 2 weisen die Aufnahmeschiene 4 und das Sensorgehäuse 3 jeweils mechanische Rastmittel 8 auf, wodurch die Sensorgehäuse 3 in der Aufnahmeschiene 4 eingerastet werden können, wodurch die Sensorgehäuse 3 in der Aufnahmeschiene 4 mechanisch fixiert sind.

Die mechanischen Rastmittel 8 geben dabei bereits optional mindestens eine vordefinierte Lage des Sensorgehäuses 3 vor. Es können auch mehrere vordefinierte Lagen vorgesehen werden, wobei jedoch immer eine richtige Kontaktierung des Kontaktelements 5 gewährleistet wird.

Die Rastmittel 8 bzw. ein Einrastmechanismus besteht beispielsweise aus Rast- und Federelementen am Sensorgehäuse 3 und an der Aufnahmeschiene 4, so dass das Sensorgehäuse 3 in die Aufnahmeschiene 4 eingerastet bzw. eingeschnappt werden kann.

Gemäß Figur 2 sind die zwei Leiterbahnen 6 für zwei Busleitungen 9 vorgesehen.

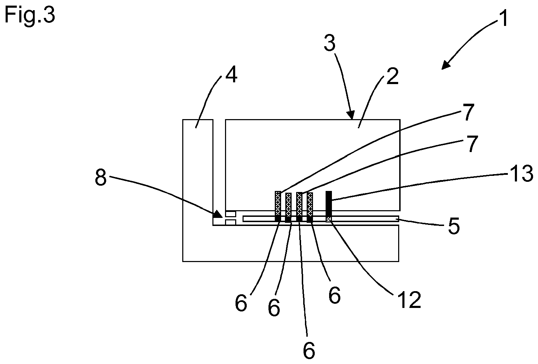

Gemäß Figur 3 weist das flächige Kontaktelement 5 mindestens eine dritte und eine vierte Leiterbahn 6 auf, wobei die dritte Leiterbahn 6 für eine Masseverbindung und die vierte Leiterbahn 6 für eine Versorgungsspannung vorgesehen ist.

Gemäß Figur 3 ist auf dem flächigen Kontaktelement 5 jeweils für jedes Sensorgehäuse 3 mindestens ein Schaltelement 12 für die Leiterbahn 6 der Versorgungsspannung vorgesehen, wobei das jeweilige Schaltelement 12 durch ein Betätigungsmittel 13 des Sensorgehäuses 3 betätigt wird.

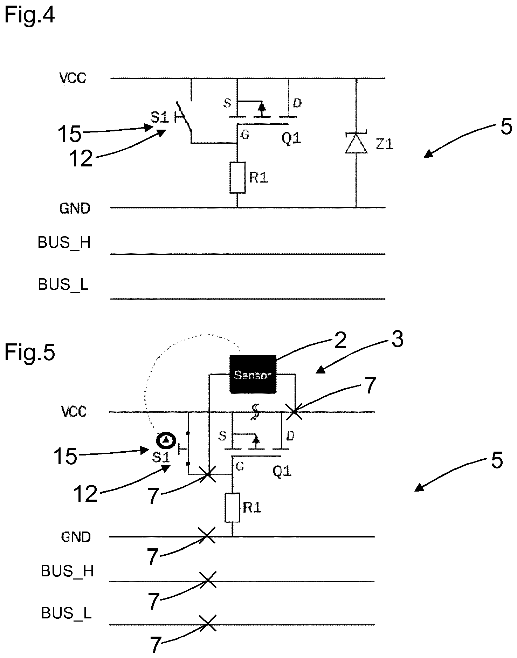

Dadurch ist es wie in Figur 4 und 5 dargestellt möglich, die Versorgungsspannung lokal durch den Sensor 2 bzw. das Sensorgehäuse reversibel für andere nachfolgend angeordnete Sensorgehäuse zu unterbrechen. Diese Leitung wird dann anschließend im Sensorgehäuse geschlossen. Das Sensorgehäuse besitzt hierzu fünf elektrische Kontaktstifte 7 zum flächigen Kontaktelement, wie in Figur 5 dargestellt. Das flächige Kontaktelement 5 weist hierzu an jeder möglichen Verbindungsstelle zu Sensorgehäusen fünf Kontaktflächen auf. Die fünf Kontaktstifte 7 sind zwei Kontaktstifte 7 für die Busleitungen, ein Kontaktstift 7 für die Masseverbindung und zwei Kontaktstifte 7 für die Versorgungsleitungen.

Durch die Unterbrechung und anschließende Verbindung der Versorgungspannung können beispielsweise die Sensoren 2 nacheinander initialisiert werden. Weiter können die Sensoren 2 dadurch beispielsweise gegenüber einer übergeordneten Steuerung identifiziert werden.

Gemäß Figur 1 weiß eine übergeordnete Steuer- und Auswerteeinheit 16 dadurch, in welcher Reihenfolge die Sensorgehäuse 3 angeordnet sind. Die einzelnen Steuer- und Auswerteeinheiten der Sensorgehäuse können vor jeder Inbetriebnahme lokal die Energieversorgung unterbrechen. Eine übergeordnete Steuer- und Auswerteeinheit 16 kommuniziert beispielsweise mit dem ersten Sensor 2 bzw. dem ersten Sensorgehäuse 3. Nachdem eine Adresszuordnung für den ersten Sensor 2 bzw. das erste Sensorgehäuse 3 erfolgt ist, überbrückt der erste Sensor 2 die Energieversorgung, so dass eine Kommunikation mit dem zweiten Sensor 2 erfolgt und auf die gleiche Weise eine Zuordnung bzw. eine Adresszuordnung für den zweiten Sensor 2 erfolgt. Entsprechend werden die übrigen Sensoren 2 initialisiert.

Für die Unterbrechung der Leiterbahn 6 ist an dem Sensorgehäuse 3 das Betätigungsmittel 13 bzw. das Betätigungselement vorgesehen. Durch das Einrasten des Sensorgehäuses 3 in die Aufnahmeschiene 4 übt das Betätigungselement eine Kraft auf das Schaltelement 12 aus, welches als Schalter arbeitet.

Das Betätigungselement kann beispielsweise aus mehreren aneinandergereihten Elementen bestehen, welche beispielsweise federnd gelagert sind. Die jeweilige Federkraft ist größer als die Betätigungskraft des Schalters. Damit kann das Sensorgehäuse rasterlos auf die Aufnahmeschiene aufgebracht werden.

Dadurch wird beispielsweise das Schaltelement 12, welches beispielsweise als Schließerkontakt 15 ausgebildet ist, geschlossen und die Versorgungsspannung unterbrochen. Danach wird die Versorgungsspannung wieder über eine interne Kontaktierung im Sensorgehäuse 3 geschlossen.

Bei dem Schaltelement 12 kann es sich um einen elektromechanischen Schalter handeln.

In einer anderen Ausführung kann der elektromechanische Schalter Teil einer Schaltung sein, beispielsweise auf Basis einer Transistorschaltung, insbesondere mit mindestens einem MOSFET-Transistor.

Wird der Sensor 2 von der Aufnahmeschiene 4 getrennt, öffnet sich der Schalter wieder und die Stromleitung ist wieder geschlossen.

Gemäß Figur 4 ist das Schaltelement 12 ein Schließerkontakt 15.

Der Schließerkontakt 15 ist in Verbindung mit einem Transistor vorgesehen, um die Spannungsversorgung zu unterbrechen.

Gemäß Figur 4 ist ein Schnappkontakt als Schließerkontakt 15 ausgebildet und eine zusätzliche Elektronikschaltung ist vorgesehen, um die Spannungsversorgung zu unterbrechen.

Figur 4 zeigt den Fall ohne Sensor. Der Schließerkontakt S1 ist offen. Die Spannung U_{GS} = -VCC. Der P-Channel MOSFET Transistor Q1 schaltet. Es ist eine optionale Schutzdiode Z1 zum Schutz des MOSFET Transistor Q1 vor Überspannung vorgesehen.

Gemäß Figur 5 ist ein Sensor 2 mit einem Sensorgehäuse 3 eingesetzt. Das Sensorgehäuse 3 ist eingerastet und der Schließerkontakt S1 geschlossen. Die Spannung U_{GS} = 0 Volt. Die Kontaktierungen bzw. die Kontaktstifte 7 sind schematisch eingezeichnet.

Der Schließerkontakt 15 ist beispielsweise durch einen Metall-Dom gebildet, welcher als Schalter funktioniert.

Gemäß einem nicht dargestellten Ausführungsbeispiel sind die Schaltelemente durch Metallkugeln gebildet, welche über elastische Elemente zusammengehalten werden, durch einen Kontaktstift kontaktierbar sind und durch das Betätigungsmittel lokal trennbar sind.

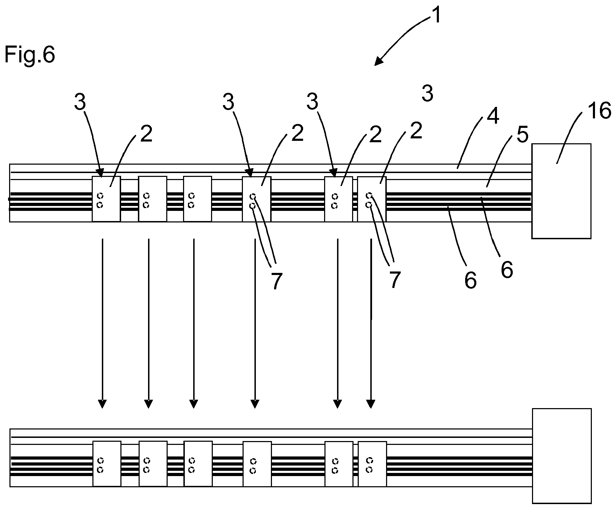

Gemäß Figur 6 sind die Sensoren 2 Einweglichtschranken. Im Falle von Lichtschranken als Sensoren 2 wird dabei gemäß Figur 6 ein frei definierbares Lichtgitter bzw. ein Lichtvorhang mit beliebigen Strahlabständen gebildet, da die Sensorgehäuse 3 in beliebigen Abständen auf der Aufnahmeschiene 4 angeordnet werden können.

Gemäß einem nicht dargestellten Ausführungsbeispiel ist das Sensorgehäuse zweiteilig aufgebaut, wobei ein erstes Teilgehäuse die Sensorelemente aufnimmt und ein zweites Teilgehäuse die Kontaktstifte aufweist, wobei das erste Teilgehäuse und das zweite Teilgehäuse über Steckkontakte miteinander verbunden sind.

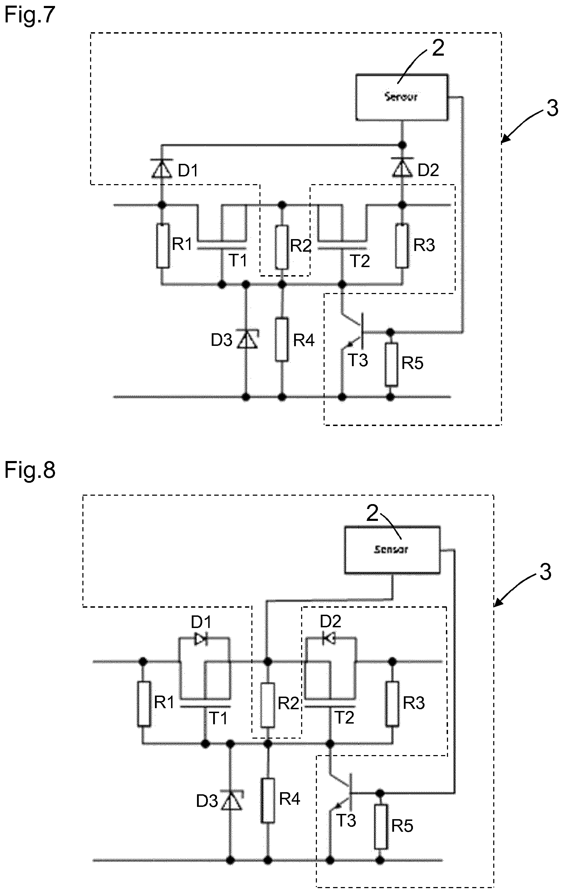

Figur 7 zeigt eine schematische Schaltung mit zwei Feldeffekttransistoren T1 und T2. Die Schaltung erlaubt einen Stromfluss in beiden Richtungen. Dabei sind die Dioden D1 und D2, der Widerstand R2 und der Transistor T3 sowie der Widerstand R5 im schematisch dargestellten Sensorgehäuse 3 untergebracht. Die Widerstände R1, R2 und R4, die Feldeffekttransistorren T1 und T2 sowie die Diode D3 sind auf der Aufnahmeschiene bzw. der Leiterplatte angeordnet. Für das Weiterschalten des Strompfades wird die Feldeffektortransistorstufe bestehend aus den Feldeffekttransistoren T1 und T2 auf der Leiterplatte oder einer flexiblen Leiterplatte genutzt. Statt mit einem Schalter schließt der Sensor mit einem niederohmigen Widerstand R5 die Feldeffektortransistorstufe. Nach erfolgter Adressierung wird der Basisanschluss von T3 auf Masse geschaltet, damit wird der Strompfad wieder frei geschaltet.

Figur 8 zeigt eine weiter vereinfachte schematische Schaltung ebenfalls mit zwei Feldeffekttransistoren T1 und T2. Die Schaltung erlaubt ebenfalls einen Stromfluss in beiden Richtungen. Dabei sind der Widerstand R2 und der Transistor T3 sowie der Widerstand R5 im schematisch dargestellten Sensorgehäuse 3 untergebracht. Die Widerstände R1, R2 und R4, die Feldeffekttransistorren T1 und T2 sowie die Dioden D1, D2 und D3 sind auf der Aufnahmeschiene bzw. der Leiterplatte angeordnet. Die internen Dioden D1 und D2 der Feldeffekttransistoren T1 und T2 können zur Versorgung des Sensors 2 mitgenutzt werden. Damit ergeben sich noch weniger Bauelemente im Sensor und weniger Kontaktpunkte zur Aufnahmeschiene.

### Bezugszeichen:

1 Sensorsystem
2 Sensor
3 Sensorgehäuse
4 Aufnahmeschiene
5 flächiges Kontaktelement
6 Leiterbahn
7 Kontaktstifte
8 mechanische Rastmittel
9 Busleitungen
10 Masseleitung
11 Versorgungsspannungsleitung
12 Schaltelement
13 Betätigungsmittel
15 Schließerkontakt
16 Steuer- und Auswerteeinheit
17 starre Leiterplatte
18 Kontaktfolie
R1, R2, R3, R4, R5 Widerstände
D1, D2, D3 Dioden
T1, T2 Feldeffekttransistoren
T3 Transistor

## Patentansprüche

1. Sensorsystem (1) mit mehreren Sensoren (2) mit jeweils einem Sensorgehäuse (3), wobei
die Sensorgehäuse (3) an einer Aufnahmeschiene (4) befestigbar sind,
wobei die Aufnahmeschiene (4) ein flächiges Kontaktelement (5) mit mindestens zwei Leiterbahnen (6) aufweist und die Sensorgehäuse (3) jeweils mindestens zwei Kontaktstifte (7) aufweisen,
wobei die Kontaktstifte (7) bei in die Aufnahmeschiene (4) eingesetztem Sensor (2) jeweils mit den Leiterbahnen (6) des flächigen Kontaktelements (5) verbunden sind, **dadurch gekennzeichnet, dass** das flächige Kontaktelement (5) mindestens eine dritte und eine vierte Leiterbahn (6) aufweist, wobei die dritte Leiterbahn (6) für eine Masseverbindung und die vierte Leiterbahn (6) für eine Versorgungsspannung vorgesehen ist, wobei auf dem flächigen Kontaktelement (5) jeweils für jedes Sensorgehäuse (3) mindestens ein Schaltelement (12) für die Leiterbahn (6) der Versorgungsspannung vorgesehen ist, wobei das jeweilige Schaltelement (12) durch ein Betätigungsmittel (13) des Sensorgehäuses (3) betätigbar ist.

2. Sensorsystem nach Anspruch 1, **dadurch gekennzeichnet, dass** das flächige Kontaktelement eine starre Leiterplatte (17) oder eine Kontaktfolie (18) ist.

3. Sensorsystem nach mindestens einem der vorhergehenden Ansprüche, **dadurch gekennzeichnet, dass** die Aufnahmeschiene (4) und die Sensorgehäuse (3) jeweils mechanische Rastmittel (8) aufweisen, wodurch die Sensorgehäuse (3) in der Aufnahmeschiene (4) eingerastet werden können, wodurch die Sensorgehäuse (3) in der Aufnahmeschiene (4) mechanisch fixiert sind.

4. Sensorsystem nach mindestens einem der vorhergehenden Ansprüche, **dadurch gekennzeichnet, dass** die zwei Leiterbahnen (6) für zwei Busleitungen vorgesehen sind.

5. Sensorsystem nach mindestens einem der vorhergehenden Ansprüche, **dadurch gekennzeichnet, dass** das Schaltelement (12) mindestens ein Öffnerkontakt oder mindestens ein Schließerkontakt (15) ist.

6. Sensorsystem nach mindestens einem der vorhergehenden Ansprüche, **dadurch gekennzeichnet, dass** das Schaltelement (12) mindestens ein Feldeffekttransistor oder eine Feldeffekttransistorstufe ist.

7. Sensorsystem nach mindestens einem der vorhergehenden Ansprüche, **dadurch gekennzeichnet, dass** die Sensoren (2) Einweglichtschranken, Reflexionslichtschranken, Lichttaster und/oder Distanzsensoren sind.

8. Sensorsystem nach mindestens einem der vorhergehenden Ansprüche, **dadurch gekennzeichnet, dass** eine zentrale Steuer- und Auswerteeinheit (16) vorgesehen ist, welche mit den Sensorgehäusen (3) über das flächige Kontaktelement (5) verbunden ist.

9. Sensorsystem nach mindestens einem der vorhergehenden Ansprüche, **dadurch gekennzeichnet, dass** das Sensorgehäuse (3) zweiteilig aufgebaut ist, wobei ein erstes Teilgehäuse die Sensorelemente aufnimmt und ein zweites Teilgehäuse die Kontaktstifte aufweist, wobei das erste Teilgehäuse und das zweite Teilgehäuse über Steckkontakte miteinander verbunden sind.

## Claims

1. A sensor system (1) having a plurality of sensors (2) each having a sensor housing (3), wherein
the sensor housings (3) are fastenable to a mounting rail (4);
wherein the mounting rail (4) has an areal contact element (5) having at least two conductor tracks (6) and the sensor housings (3) each have at least two contact pins (7); and
wherein the contact pins (7) are each connected to the conductor tracks (6) of the areal contact element (5) with a sensor (2) inserted into the mounting rail (4), **characterized in that** the areal contact element (5) has at least one third and one fourth conductor track (6), with the third conductor track (6) being provided for a ground connection and the fourth conductor track (6) being provided for a supply voltage,
with at least one switching element (12) for the conductive track (6) of the supply voltage respectively being provided for each sensor housing (3), and with the respective switching element (12) being actuable by an actuation means (13) of the sensor housing (3).

2. A sensor system in accordance with claim 1, **characterized in that** the areal contact element is a rigid circuit board (17) or a contact film (18).

3. A sensor system in accordance with at least one of the preceding claims, **characterized in that** the mounting rail (4) and the sensor housings (3) each have mechanical latching means (8), whereby the sensor housings (3) can be latched in the mounting rail (4), whereby the sensor housings (3) are mechanically fixed in the mounting rail (4).

4. A sensor system in accordance with at least one of the preceding claims, **characterized in that** the two conductor tracks (6) are provided for two bus lines.

5. A sensor system in accordance with at least one of the preceding claims, **characterized in that** the switching element (12) is at least one breaker or at least one maker (15).

6. A sensor system in accordance with at least one of the preceding claims, **characterized in that** the switching element (12) is at least one field effect transistor or one field effect transistor stage.

7. A sensor system in accordance with at least one of the preceding claims, **characterized in that** the sensors (2) are through beam sensors, reflection light barriers, light sensors and/or distance sensors.

8. A sensor system in accordance with at least one of the preceding claims, **characterized in that** a central control and evaluation unit (16) is provided that is connected to the sensor housings (3) via the areal contact element (5).

9. A sensor system in accordance with at least one of the preceding claims, **characterized in that** the sensor housing (3) is made up of two parts, with a first part housing receiving the sensor elements and a second part housing having the contact pins, and with the first part housing and the second part housing being connected to one another via plug-in contacts.

## Revendications

1. Système de capteurs (1) comportant plusieurs capteurs (2) ayant chacun un boîtier de capteur (3), dans lequel
les boîtiers de capteur (3) peuvent être fixés sur un rail de réception (4),
le rail de réception (4) comprend un élément de contact surfacique (5) ayant au moins deux pistes conductrices (6) et les boîtiers de capteur (3) comprennent chacun au moins deux broches de contact (7),
les broches de contact (7) sont chacune reliées aux pistes conductrices (6) de l'élément de contact surfacique (5) lorsque le capteur (2) est inséré dans le rail de réception (4), **caractérisé en ce que** l'élément de contact surfacique (5) comprend au moins une troisième et une quatrième piste conductrice (6),
la troisième piste conductrice (6) est prévue pour une liaison à la masse et la quatrième piste conductrice (6) est prévue pour une tension d'alimentation,
au moins un élément de commutation (12) pour la piste conductrice (6) de la tension d'alimentation est prévu sur l'élément de contact surfacique (5) pour chaque boîtier de capteur (3) respectif, et l'élément de commutation respectif (12) peut être actionné par un moyen d'actionnement (13) du boîtier de capteur (3).

2. Système de capteurs selon la revendication 1, **caractérisé en ce que** l'élément de contact surfacique est une carte à circuit imprimé rigide (17) ou une feuille de contact (18).

3. Système de capteurs selon l'une au moins des revendications précédentes, **caractérisé en ce que** le rail de réception (4) et les boîtiers de capteur (3) comprennent chacun des moyens d'enclenchement mécaniques (8) permettant d'enclencher les boîtiers de capteur (3) dans le rail de réception (4), moyennant quoi les boîtiers de capteur (3) sont fixés mécaniquement dans le rail de réception (4).

4. Système de capteurs selon l'une au moins des revendications précédentes, **caractérisé en ce que** les deux pistes conductrices (6) sont destinées à deux lignes de bus.

5. Système de capteurs selon l'une au moins des revendications précédentes, **caractérisé en ce que** l'élément de commutation (12) est au moins un contact normalement fermé ou au moins un contact normalement ouvert (15).

6. Système de capteurs selon l'une au moins des revendications précédentes, **caractérisé en ce que** l'élément de commutation (12) est au moins un transistor à effet de champ ou un étage de transistor à effet de champ.

7. Système de capteurs selon l'une au moins des revendications précédentes, **caractérisé en ce que** les capteurs (2) sont des barrières lumineuses unidirectionnelles, des barrières lumineuses à réflexion, des détecteurs photoélectriques et/ou des capteurs de distance.

8. Système de capteurs selon l'une au moins des revendications précédentes, **caractérisé en ce que** il est prévu une unité de commande et d'évaluation (16) centrale qui est connectée aux boîtiers de capteur (3) par l'intermédiaire de l'élément de contact surfacique (5).

9. Système de capteurs selon l'une au moins des revendications précédentes, **caractérisé en ce que** le boîtier de capteur (3) est conçu en deux parties, un premier boîtier partiel recevant les éléments capteurs et un second boîtier partiel comprenant les broches de contact, le premier boîtier partiel et le second boîtier partiel étant connectés entre eux par l'intermédiaire de contacts d'enfichage.
